# EUROPEAN PATENT APPLICATION

(11) **EP 2 803 967 A1**
(43) Date of publication of application: **19.11.2014**
(21) Application number: 14157163.8
(22) Date of filing: 28.02.2014
(51) Int. Cl.: G01M 3/32, F02M 65/00, G01M 13/00, G01M 3/02, G01M 15/14

(54) **Seal test fixture for a gas turbine fuel nozzle**

(30) Priority: 08.03.2013 US 201313790348
(71) Applicant: General Electric Company, Schenectady, New York 12345 (US)
(72) Inventor: Overby, Brandon Taylor, Greenville, SC South Carolina 29615 (US); Baummer, James Carroll, Greenville, SC South Carolina 29615 (US); Bellino, Mark Carmine, Greenville, SC South Carolina 29615 (US)
(74) Representative: Illingworth-Law, William Illingworth

(57) **Abstract**

A seal test fixture 500 for a gas turbine fuel nozzle 100 including: an enclosed container 502 for receiving a body 102 of the gas turbine fuel nozzle 100 including a seal 114; a test chamber 504 coupled to the enclosed container 502 for sealingly enclosing a flange 104 of the gas turbine fuel nozzle 100 and fluidly communicating with a leak path of the gas turbine fuel nozzle 100; an air injector opening 506 through which pressurized air is injected into a main fuel chamber 108 of the gas turbine fuel nozzle 100; and a pressure gauge 510 for measuring an air pressure within the test chamber 504.

## Description

This invention relates generally to gas turbine fuel nozzles and more particularly to a seal test fixture for a gas turbine fuel nozzle.

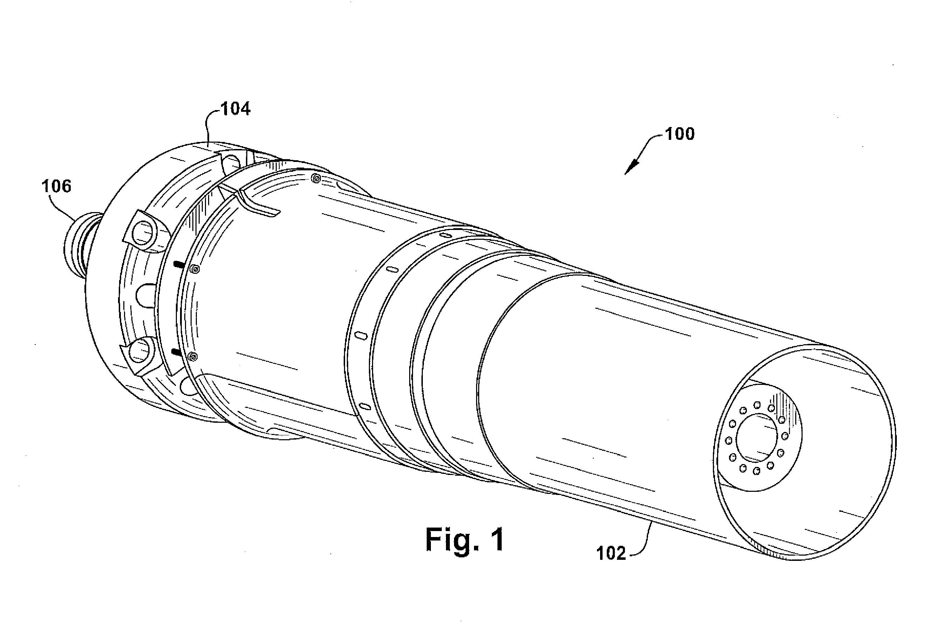

Generally, a gas turbine draws in air from the atmosphere and the air is compressed in a compressor. The compressed air is then mixed with gas fuel received from gas turbine fuel nozzles where the air-fuel mixture is ignited in a combustor. The resulting explosion powers the turbine and combusted air is exhausted. A gas turbine may include a plurality of gas turbine fuel nozzles. FIG. 1 shows a perspective view of a known gas turbine fuel nozzle 100. Gas turbine fuel nozzle 100 includes a body 102, a flange 104, and a cooling air passage 106.

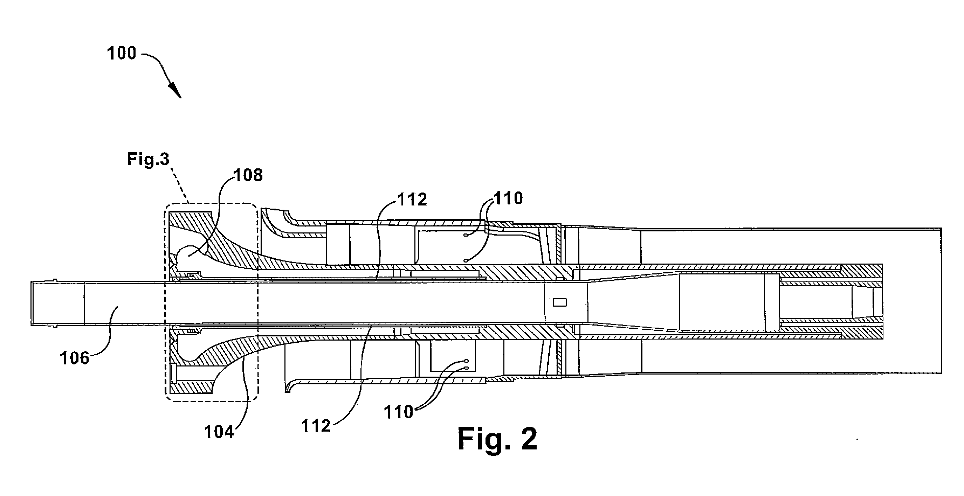

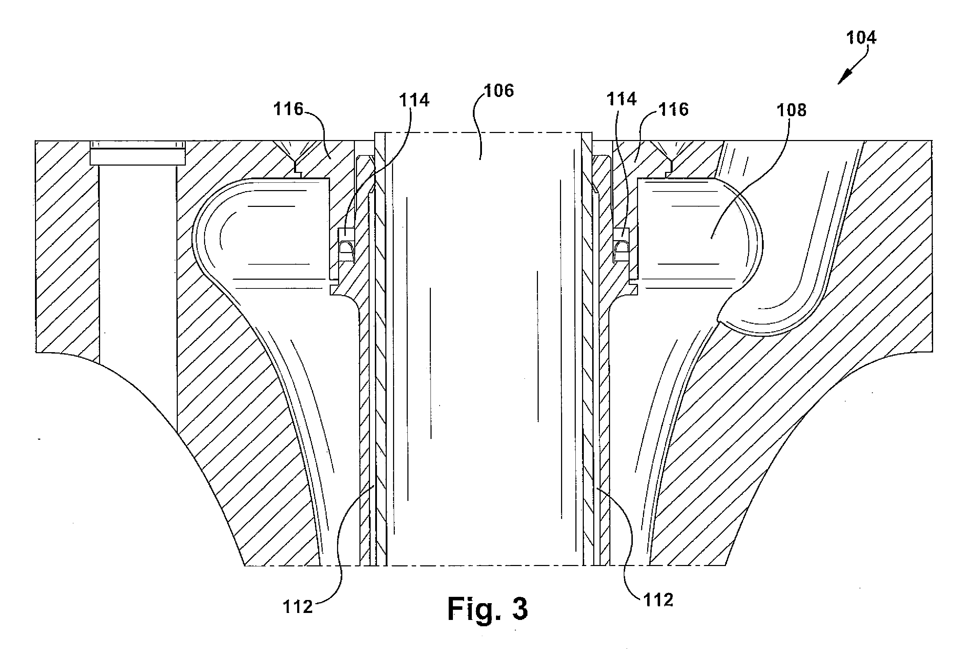

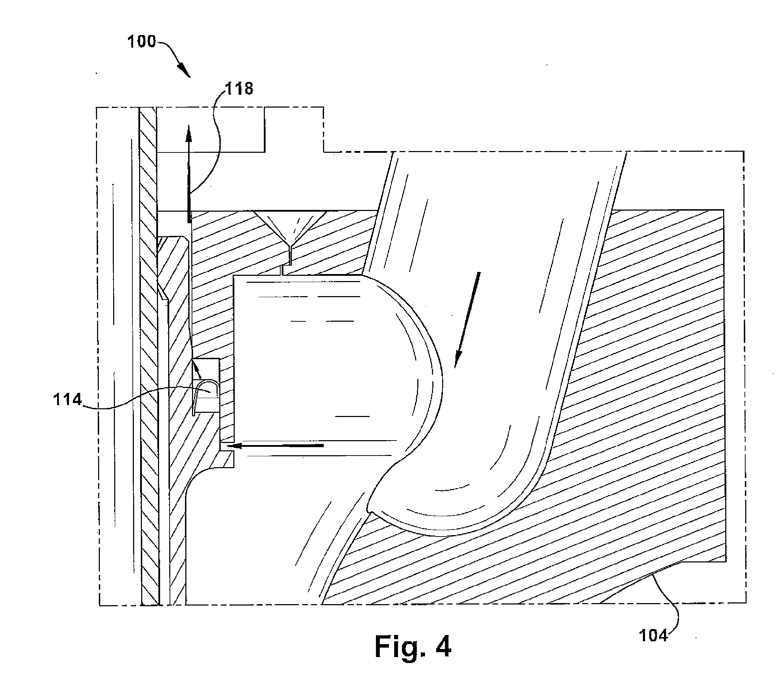

FIG. 2 shows a cross-sectional view of the known gas turbine fuel nozzle 100. FIG. 3 shows a more detailed cross sectional view of the flange 104 of the known gas turbine fuel nozzle 100 of FIG. 2. Air is received in a main fuel chamber 108. Fuel is introduced through a plurality of fuel holes 110 (FIG. 2) where it is mixed with the air and released from the gas turbine fuel nozzle 100 for ignition within the gas turbine. Within the gas turbine fuel nozzle 100 an alternate fuel passage 112 may be provided. As shown in FIG. 3, a seal 114 between the alternate fuel passage 112 and the main fuel chamber 108 prevents fuel and/or air from leaking with alternate fuel. Gas turbine fuel nozzle 100 may also include the cooling air passage 106. Seal 114 may prevent cooling air from mixing with fuel. A seal retainer 116 holds the seal 114 in place. The seal retainer 116 may be welded in place. Under operational conditions, the seal 114 is subjected to significant thermal and pressure forces. As a result, the seal 114 is subject to wear and may leak. FIG. 4 shows a cross sectional view of a portion of the flange 104 of the known gas turbine fuel nozzle 100. If the seal 114 leaks, air may move past the seal 114 along a leak path 118.

A first aspect of the invention provides a seal test fixture for a gas turbine fuel nozzle, comprising: an enclosed container for receiving a body of the gas turbine fuel nozzle including a seal; a test chamber coupled to the enclosed container for sealingly enclosing a flange of the gas turbine fuel nozzle and fluidly communicating with a leak path of the gas turbine fuel nozzle; an air injector opening through which pressurized air is injected into a main fuel chamber of the gas turbine fuel nozzle; and a pressure gauge for measuring an air pressure within the test chamber.

A second aspect of the invention provides a seal testing system, comprising: a computer system including: a receiver for receiving a pre-injection pressure and a post-injection pressure; a comparator for comparing the pre-injection pressure and a post-injection pressure; and a determination system for determining an integrity of the seal based upon the comparing.

These and other aspects, advantages and salient features of the invention will become apparent from the following detailed description, which, when taken in conjunction with the annexed drawings, where like parts are designated by like reference characters throughout the drawings, disclose embodiments of the invention.

The above and other aspects, features and advantages of the invention will be better understood by reading the following more particular description of the invention in conjunction with the accompanying drawings.
FIG. 1 shows a perspective view of a known gas turbine fuel nozzle.
FIG. 2 shows a cross-sectional view of the known gas turbine fuel nozzle.
FIG. 3 shows cross sectional view of the flange of the known gas turbine fuel nozzle.
FIG. 4 shows cross sectional view of a portion of the flange of the known gas turbine fuel nozzle.
FIG. 5 shows a perspective view of a seal test fixture for a gas turbine fuel nozzle in accordance with the present invention.
FIG. 6 shows a cross-sectional view of a portion of a seal test fixture for a gas turbine fuel nozzle in accordance with the present invention.
FIG. 7 shows a seal test system for a gas turbine fuel nozzle in accordance with the present invention.
FIG. 8 shows a flow diagram for a method of testing a seal in accordance with the present invention.

The drawings are not necessarily to scale. The drawings are merely schematic representations, not intended to portray specific parameters of the invention. The drawings are intended to depict only typical embodiments of the invention, and therefore should not be considered as limiting the scope of the invention. In the drawings, like numbering represents like elements.

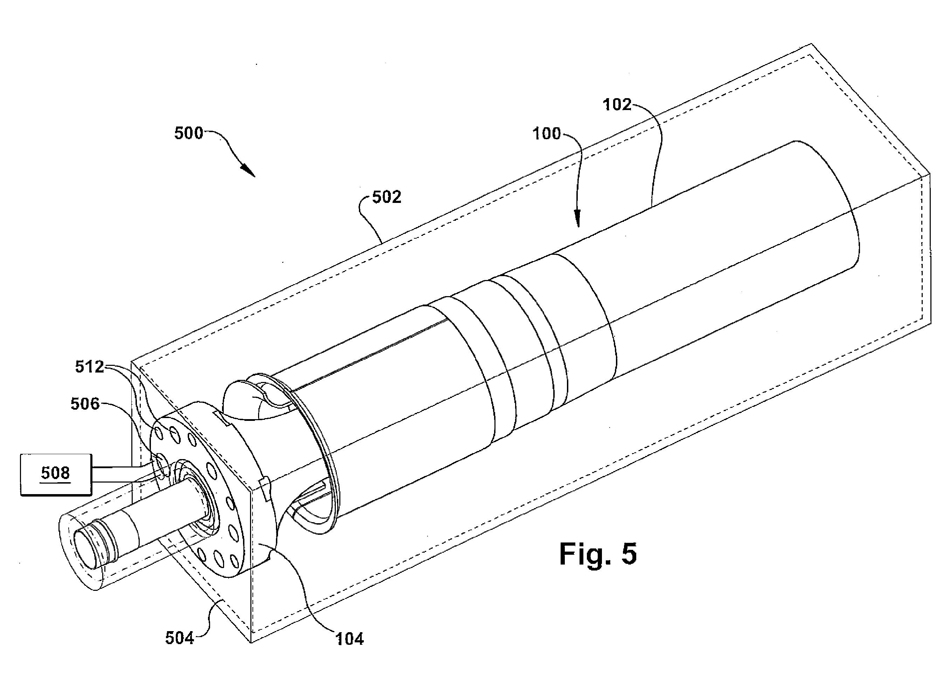

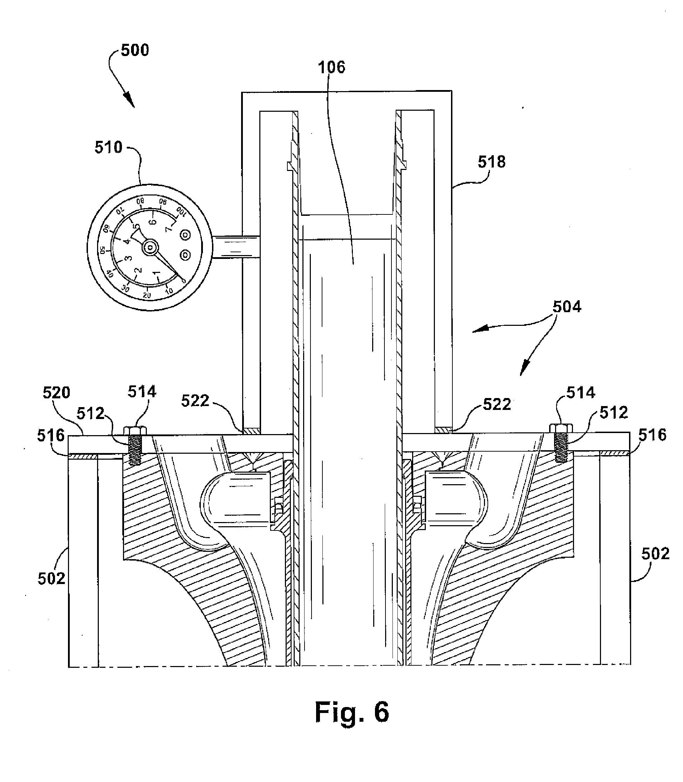

Referring to FIG. 5, a perspective view of one embodiment of a seal test fixture 500 for a gas turbine fuel nozzle 100 is shown. Referring to FIG. 6, a cross-sectional view of one embodiment of a portion of a seal test fixture 500 for a gas turbine fuel nozzle 100 is shown. The seal test fixture 500 may include an enclosed container 502 for receiving the body 102 of the gas turbine fuel nozzle 100 including the seal 114. Enclosed container 502 may include metal, polymer, or any other material capable of sustaining pressures of up to about 100 psi. It will be readily recognized that if higher pressures are indicated for testing the seal 114, then enclosed container 502 may include materials capable of withstanding the higher pressures.

The seal test fixture 500 may further include a test chamber 504 coupled to the enclosed container 502 for sealingly enclosing the flange 104 (FIG. 5) of the gas turbine fuel nozzle 100 and in fluid communication with the leak path 116 of the gas turbine fuel nozzle 100 through which the seal 114 would leak air and/or fuel.

The seal test fixture 500 may further include an air injector opening 506 through which pressurized air is injected into a main fuel chamber 108 of the gas turbine fuel nozzle 100. The seal test fixture 500 may include an air injector 508 sealingly connected to the air injector opening 506 for a supply of air that may be injected through the air injector opening 506 into the main fuel chamber 108. The air injector 508 may be able to inject air up to a pressure of up to about 100 psi.

The seal test fixture 500 may further include a pressure gauge 510 (FIG. 5) for measuring an air pressure within the test chamber 504. The pressure gauge 510 may receive air from the test chamber 504 and display and/or communicate a measurement of the air pressure in the test chamber 504.

The test chamber 504 may include a plurality of connection holes 512. The plurality of connection holes 512 may be used to secure the flange 104 to the test chamber 504. Each connection hole 512 may receive one of a plurality of connectors 514 for securing the flange 104 to the test chamber 504. Each of the plurality of connectors 514 may include a bolt, screw, pin, or any other known device for connecting.

The seal test fixture 500 may further include a first gasket 516 between the enclosed container 502 and the test chamber 504. First gasket 516 may provide an improved seal between the enclosed container 502 and the test chamber 504. The test chamber 504 may be in part or may include a first part 518 and a second part 520. The first part 518 may substantially cover and secure the flange 104. The second part 520 may enclose the cooling air passage 106. The test chamber may 504 include a second gasket 522 between the first part 518 and the second part 520. Test chamber 504 may include metal, polymer, or any other material capable of sustaining pressures of up to about 100 psi. It will be readily recognized that if higher pressures are indicated for testing the seal, then test chamber 504 may include materials capable of withstanding the higher pressures.

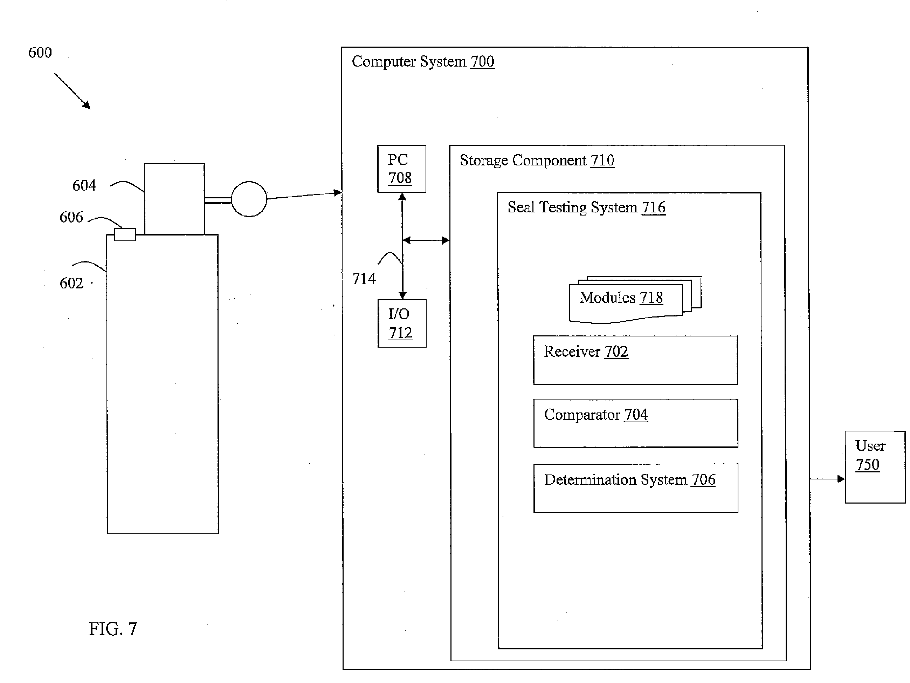

In FIG. 7, one embodiment of the seal test fixture 600 with a computer system 700 is shown. Computer system 700 including: a receiver 702 for receiving a pre-injection pressure and a post-injection pressure; a comparator 704 for comparing the pre-injection pressure and a post-injection pressure; and a determination system 706 for determining whether the seal has a leak or is substantially intact based upon the comparing.

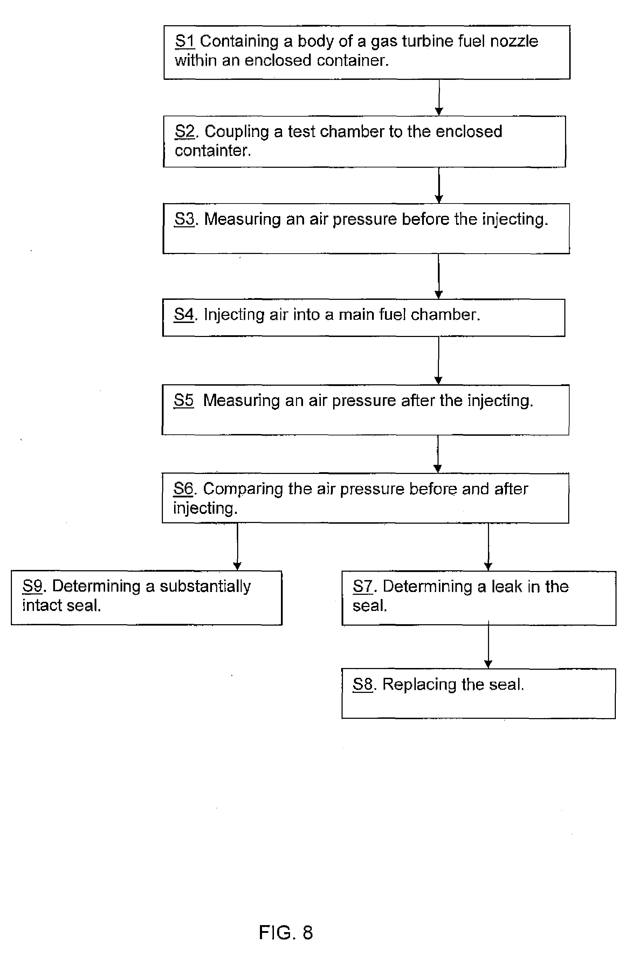

Seal test fixture 600 may be used to a method for testing the seal 114 of the gas turbine fuel nozzle 100 describe herein. Referring to FIG. 8, a flow diagram of one embodiment of a method of testing the seal 114 of the gas turbine fuel nozzle 100 is shown. At S1, the body 102 of the gas turbine fuel nozzle 100 is contained in the enclosed container 602 of the seal test fixture 600. At S2, the test chamber 604 is coupled to the enclosed container 602 thereby sealingly enclosing the flange 104 of the gas turbine fuel nozzle 100 and in fluid communication with the leak path 116 of the gas turbine fuel nozzle 100 through which the seal 114 would leak. At S3, the air pressure in the test chamber 604 before injecting air (see S4) is measured. At S4, air is injected through the air injection opening 606 into the main fuel chamber 108 of the gas turbine fuel nozzle 100 filling the enclosed container 602 with injected air up to a pressure up to about 100 psi. At S5, the air pressure in the test chamber 604 after injecting is measured. At S6, the air pressure before the injecting and the air pressure after the injecting is compared. At S7, a leak through the seal 114 is determined when the air pressure after the injecting is higher than the air pressure before the injecting. At S8, the seal 114 is replaced in response to determining the potential leak. Alternatively at S9, the seal 114 is determined to be substantially intact when the air pressure after the injecting is substantially the same as the air pressure before the injecting.

Referring back to FIG. 7, computer system 700 is shown in communication with a user 750. User 750 may, for example, be a programmer or operator. User 750 may also be a device or a computer. Interactions between these components and computer system 700 will be discussed in subsequent portions of this application. Computer system 700 is shown including a processing component (PC) 708 (e.g., one or more processors), a storage component 710 (e.g., a storage hierarchy), an input/output (I/O) component 712 (e.g., one or more I/O interfaces and/or devices), and a communications pathway 714. In one embodiment, processing component 708 executes program code, such as seal testing system 716, which is at least partially embodied in storage component 710. While executing program code, processing component 708 can process data, which can result in reading and/or writing the data to/from storage component 710 and/or I/O component 712 for further processing. Pathway 714 provides a communications link between each of the components in computer system 700. I/O component 712 can comprise one or more human I/O devices or storage devices, which enable user 750 to interact with computer system 700 and/or one or more communications devices to enable user 750 to communicate with computer system 700 using any type of communications link. To this extent, seal testing system 716 can manage a set of interfaces (e.g., graphical user interface(s), application program interface, and/or the like) that enable human and/or system interaction with seal testing system 716.

In any event, computer system 700 can comprise one or more general purpose computing articles of manufacture (e.g., computing devices) capable of executing program code installed thereon. As used herein, it is understood that "program code" means any collection of instructions, in any language, code or notation, that cause a computing device having an information processing capability to perform a particular function either directly or after any combination of the following: (a) conversion to another language, code or notation; (b) reproduction in a different material form; and/or (c) decompression. To this extent, seal testing system 716 can be embodied as any combination of system software and/or application software. In any event, the technical effect of computer system 700 is to provide processing instructions for testing the seal of the gas turbine fuel nozzle.

Further, seal testing system 716 can be implemented using a set of modules 718. In this case, a module 718 can enable computer system 700 to perform a set of tasks used by seal testing system 716, and can be separately developed and/or implemented apart from other portions of seal testing system 716. Seal testing system 716 may include modules 718 which comprise a specific use machine/hardware and/or software. Regardless, it is understood that two or more modules 718, and/or systems may share some/all of their respective hardware and/or software. Further, it is understood that some of the functionality discussed herein may not be implemented or additional functionality may be included as part of computer system 700.

When computer system 700 comprises multiple computing devices, each computing device may have only a portion of seal testing system 716 embodied thereon (e.g., one or more modules 718). However, it is understood that computer system 700 and seal testing system 716 are only representative of various possible equivalent computer systems that may perform a process described herein. To this extent, in other embodiments, the functionality provided by computer system 700 and seal testing system 716 can be at least partially implemented by one or more computing devices that include any combination of general and/or specific purpose hardware with or without program code. In each embodiment, the hardware and program code, if included, can be created using standard engineering and programming techniques, respectively.

Regardless, when computer system 700 includes multiple computing devices, the computing devices can communicate over any type of communications link. Further, while performing a process described herein, computer system 700 can communicate with one or more other computer systems using any type of communications link. In either case, the communications link can comprise any combination of various types of wired and/or wireless links; comprise any combination of one or more types of networks; and/or utilize any combination of various types of transmission techniques and protocols.

As discussed herein, seal testing system 716 enables computer system 700 to provide processing instructions for testing the seal of the gas turbine fuel nozzle. Seal testing system 716 may include logic, which may include the following functions: receiver 702, comparator 704, and determination system 706. In one embodiment, seal testing system 716 may include logic to perform the above-stated functions. Structurally, the logic may take any of a variety of forms such as a field programmable gate array (FPGA), a microprocessor, a digital signal processor, an application specific integrated circuit (ASIC) or any other specific use machine structure capable of carrying out the functions described herein. Logic may take any of a variety of forms, such as software and/or hardware. However, for illustrative purposes, seal testing system 716 and logic included therein will be described herein as a specific use machine. As will be understood from the description, while logic is illustrated as including each of the above-stated functions, not all of the functions are necessary according to the teachings of the invention as recited in the appended claims.

While shown and described herein as a seal testing system 716, it is understood that aspects of the invention further provide various alternative embodiments. For example, in one embodiment, the invention provides a computer program embodied in at least one computer-readable medium, which when executed, enables a computer system to measure gas mixtures. To this extent, the computer-readable medium includes program code, such as seal testing system 716, which implements some or all of a process described herein. It is understood that the term "computer-readable medium" comprises one or more of any type of tangible medium of expression capable of embodying a copy of the program code (e.g., a physical embodiment). For example, the computer-readable medium can comprise: one or more portable storage articles of manufacture; one or more memory/storage components of a computing device; paper; and/or the like.

In still another embodiment, the invention provides a method of testing the seal of the gas turbine fuel nozzle. In this case, a computer system, such as computer system 700 (FIG. 7), can be obtained (e.g., created, maintained, made available, etc.) and one or more modules 718 for performing a process described herein can be obtained (e.g., created, purchased, used, modified, etc.) and deployed to the computer system 700. To this extent, the deployment can comprise one or more of: (1) installing program code on a computing device from a computer-readable medium; (2) adding one or more computing and/or I/O devices to the computer system 700; and (3) incorporating and/or modifying the computer system 700 to enable it to perform a process described herein.

It is understood that aspects of the invention can be implemented as part of a business method that performs a process described herein on a subscription, advertising, and/or fee basis. That is, a service provider could offer to provide processing instructions for testing the seal of the gas turbine fuel nozzle.as described herein. In this case, the service provider can manage (e.g., create, maintain, support, etc.) a computer system 700, such as computer system 700 (FIG. 1), that performs a process described herein for one or more customers. In return, the service provider can receive payment from the customer(s) under a subscription and/or fee agreement, receive payment from the sale of advertising to one or more third parties, and/or the like.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

While various embodiments are described herein, it will be appreciated from the specification that various combinations of elements, variations or improvements therein may be made by those skilled in the art, and are within the scope of the invention. In addition, many modifications may be made to adapt a particular situation or material to the teachings of the invention without departing from essential scope thereof. Therefore, it is intended that the invention not be limited to the particular embodiment disclosed as the best mode contemplated for carrying out this invention, but that the invention will include all embodiments falling within the scope of the appended claims.

Various aspects and embodiments of the present invention are defined by the following numbered clauses:
1. A seal test fixture for a gas turbine fuel nozzle, comprising:
   an enclosed container for receiving a body of the gas turbine fuel nozzle including a seal;
   a test chamber coupled to the enclosed container for sealingly enclosing a flange of the gas turbine fuel nozzle and fluidly communicating with a leak path of the gas turbine fuel nozzle;
   an air injector opening through which pressurized air is injected into a main fuel chamber of the gas turbine fuel nozzle; and
   a pressure gauge for measuring an air pressure within the test chamber.
2. The seal test fixture of clause 1, wherein an air injector is sealingly connected to the air injector opening.
3. The seal test fixture of any preceding clause, wherein the test chamber includes a plurality of connection holes, each connection hole for receiving one of a plurality of connectors for securing the flange to the test chamber.
4. The seal test fixture of any preceding clause, further comprising:
   a first gasket between the enclosed container and the test chamber.
5. The seal test fixture of any preceding clause, wherein the test chamber includes a first part and a second part, wherein the first part substantially covers and secures the flange and the second part encloses a cooling air passage.
6. The seal test fixture of any preceding clause, further comprising:
   a second gasket between the first part and the second part.
7. The seal test fixture of any preceding clause, wherein the container and the test chamber includes one of a metal or a polymer.
8. The seal test fixture of any preceding clause, further comprising:
   a computer system including:
      a receiver for receiving a pre-injection pressure and a post-injection pressure;
      a comparator for comparing the pre-injection pressure and a post-injection pressure; and
      a determination system for determining whether the seal leaks or is substantially intact based upon the comparing.
9. The seal test fixture of any preceding clause, wherein the seal is determined to leak when the post-injection air pressure is higher than the pre-injection air pressure.
10. The seal test fixture 8, wherein the seal is determined to be substantially intact when the post-injection air pressure is the same as the pre-injection air pressure.
11. A seal testing system, comprising:
   a computer system including:
      a receiver for receiving a pre-injection pressure and a post-injection pressure;
      a comparator for comparing the pre-injection pressure and a post-injection pressure; and
      a determination system for determining whether the seal leaks or is substantially intact based upon the comparing.
12. The seal testing system of any preceding clause, wherein the seal is determined to leak when the post-injection air pressure is higher than the pre-injection air pressure.
13. The seal testing system of any preceding clause, wherein the seal is determined to be substantially intact when the post-injection air pressure is the same as the pre-injection air pressure.
14. The seal testing system of any preceding clause, further comprising:
   a seal test fixture for a gas turbine fuel nozzle, comprising:
      an enclosed container for receiving a body of the gas turbine fuel nozzle including a seal;
      a test chamber coupled to the enclosed container for sealingly enclosing a flange of the gas turbine fuel nozzle and fluidly communicating with a leak path of the gas turbine fuel nozzle;
      an air injector opening through which pressurized air is injected into a main fuel chamber of the gas turbine fuel nozzle; and
      a pressure gauge for measuring an air pressure within the test chamber.
15. The seal testing system of any preceding clause, wherein an air injector is sealingly connected to the air injector opening.
16. The seal testing system of any preceding clause, wherein the test chamber includes a plurality of connection holes, each connection hole for receiving one of a plurality of connectors for securing the flange to the test chamber.
17. The seal testing system of any preceding clause, further comprising:
   a first gasket between the enclosed container and the test chamber.
18. The seal testing system of any preceding clause, wherein the test chamber includes a first part and a second part, wherein the first part substantially covers and secures the flange and the second part encloses a cooling air passage.
19. The seal testing system of any preceding clause, further comprising:
   a second gasket between the first part and the second part.
20. The seal testing system of any preceding clause, wherein the container and the test chamber include one of a metal or a polymer.

## Claims

1. A seal test fixture (500) for a gas turbine fuel nozzle (100), comprising:
an enclosed container (502) for receiving a body (102) of the gas turbine fuel nozzle (100) including a seal (140);
a test chamber (504) coupled to the enclosed container (502) for sealingly enclosing a flange (104) of the gas turbine fuel nozzle (100) and fluidly communicating with a leak path of the gas turbine fuel nozzle (100);
an air injector opening (506) through which pressurized air is injected into a main fuel chamber (108) of the gas turbine fuel nozzle (100); and
a pressure gauge (510) for measuring an air pressure within the test chamber (504).

2. The seal test fixture of claim 1, wherein an air injector (508) is sealingly connected to the air injector opening (506).

3. The seal test fixture of claim 1 or claim 2, wherein the test chamber (504) includes a plurality of connection holes (512), each connection hole for receiving one of a plurality of connectors for securing the flange (104) to the test chamber (504).

4. The seal test fixture of claim 1, 2 or 3, further comprising:
a first gasket (516) between the enclosed container (502) and the test chamber (504).

5. The seal test fixture of any preceding claim, wherein the test chamber (504) includes a first part (518) and a second part (520), wherein the first part (518) substantially covers and secures the flange (104) and the second part (520) encloses a cooling air passage (106).

6. The seal test fixture of claim 5, further comprising:
a second gasket (522) between the first part (518) and the second part (520).

7. The seal test fixture of any preceding claim, wherein the container and the test chamber (504) includes one of a metal or a polymer.

8. The seal test fixture of any preceding claim, further comprising:
a computer system (700) including:
a receiver (702) for receiving a pre-injection pressure and a post-injection pressure;
a comparator (704) for comparing the pre-injection pressure and a post-injection pressure; and
a determination system (706) for determining whether the seal leaks or is substantially intact based upon the comparing.

9. The seal test fixture of claim 8, wherein the seal (114) is determined to leak when the post-injection air pressure is higher than the pre-injection air pressure.

10. The seal test fixture of claim 8 or claim 9, wherein the seal (114) is determined to be substantially intact when the post-injection air pressure is the same as the pre-injection air pressure.

11. A seal testing system, comprising:
a computer system (700) including:
a receiver (702) for receiving a pre-injection pressure and a post-injection pressure;
a comparator (704) for comparing the pre-injection pressure and a post-injection pressure; and
a determination system (706) for determining whether the seal leaks or is substantially intact based upon the comparing.

12. The seal testing system of claim 11, wherein the seal (114) is determined to leak when the post-injection air pressure is higher than the pre-injection air pressure.

13. The seal testing system of claim 11 or claim 12, wherein the seal (114) is determined to be substantially intact when the post-injection air pressure is the same as the pre-injection air pressure.

14. The seal testing system of claim 11, 12 or 13, further comprising:
a seal test fixture (500) for a gas turbine fuel nozzle (100) according to any one of claims 1 to 7.
